# EUROPEAN PATENT APPLICATION

(11) **EP 2 444 689 A1**
(43) Date of publication of application: **25.04.2012**
(21) Application number: 10789586.4
(22) Date of filing: 18.06.2010
(51) Int. Cl.: F16F 15/08, B60K 5/12, F16F 1/36

(54) **VIBRATION DAMPING DEVICE**

(30) Priority: 18.06.2009 JP 2009145588
(71) Applicant: Toyo Tire&Rubber Co., Ltd., Nishi-ku Osaka-shi Osaka 550-0002 (JP)
(72) Inventor: SAKATA, Toshifumi, Osaka-shi Osaka 550-0002 (JP)
(74) Representative: Prüfer & Partner GbR European Patent Attorneys
(86) International application number: PCT/JP2010/060374
(87) International publication number: WO 2010/147213

(57) **Abstract**

A vibration-proof apparatus which enables the structure of a resin die to be simplified. A vibration-proof apparatus comprising: a coupling member (10) consisting of a resin material and provided with leg part (13) in which thin and thick elastic members (45, 46), which are vulcanized and bonded to short-axis and long-axis attachment bracket members (50, 51), are press-fitted, and also with a main body part (11) which is formed so as to be continuous with the leg parts; a vibration-proof base (40) for connecting an inner cylinder (30) to the main body part (11) of the coupling member (10) and consisting of a rubber-like elastic body. The direction of the axes of press-fitting holes which are formed in the leg parts (13) and into which both the elastic members (45, 46) are press-fitted and the direction of the axis of the inner cylinder (30) are configured to be parallel to each other, and as a result, when the vibration-proof apparatus (1) is removed from the resin die after the coupling member (10) is injection-molded, the vibration-proof apparatus (1) can be drawn in the same direction. Thus, the structure of the resin die can be simplified by simplifying the separation structure of the resin die.

## Description

### Technical Field

The present invention relates to a vibration-proof apparatus, and particularly to a vibration-proof apparatus for which the structure of a resin die can be simplified.

### Background Art

Resin has been actively used for parts of a vibration-proof apparatus from the past in order to reduce the weight, and Patent Literature 1 discloses such a conventional vibration-proof apparatus in which resin is actively used. In the conventional vibration-proof apparatus, an inner cylinder bracket 14 to which a main body rubber 16 is vulcanized and attached in advance and an attachment bracket 30 to which an elastic member 38 is similarly vulcanized and attached are integrally formed with a bracket 20 made of resin material. According to the vibration-proof apparatus, even in the case where vibration at a frequency band that cannot be damped by the main body rubber 16 is input, the vibration can be damped by the elastic member 38. Thus, it is possible to damp vibration at a wide range of frequency bands.

### Citation List

### Patent Literature

[Patent Literature 1] Japanese Patent Application Laid-Open Publication No. H7-280034 (Paragraph [0028], Fig. 2 and the like)

### Summary of Invention

### Technical Problem

However, in the above-described conventional vibration-proof apparatus, the axial directions of the inner cylinder bracket 14 and the attachment bracket 30 are orthogonal to and different from each other. Thus, the split structure of a resin die used for molding the vibration-proof apparatus is complicated, resulting in a problem of complication of the structure of the resin die.

The present invention has been achieved to address the above-described problem, and an object thereof is to provide a vibration-proof apparatus for which the structure of a resin die can be simplified.

### Solution to Problem

For achieving the object, Claim 1 defines a vibration-proof apparatus comprising: a plurality of first attachment members that are attached on the automobile body side; coupling members made of resin material that include leg parts in which the plurality of first attachment members are arranged and a main body part that is formed continuously from the leg parts; a second attachment member that is attached on the vibration generator side; and a vibration-proof base made of rubber-like elastic material that couples the second attachment member to the main body part of the coupling members. A plurality of elastic members made of rubber-like elastic material that couple the plurality of first attachment members to the leg parts of the coupling members are provided, each of the first attachment members and the second attachment member is formed in a cylindrical shape having a through-hole, the first attachment members are inserted into the leg parts of the coupling members for molding or pressed thereinto together with the elastic members, and the axial directions of the first attachment members or press-fit holes which are formed at the leg parts of the coupling members and into which the first attachment members and the elastic members are pressed are parallel with the axial direction of the second attachment member.

According to Claim 2, in the vibration proof apparatus according to Claim 1, the plurality of elastic members are different from each other in spring constant.

According to Claim 3, in the vibration proof apparatus according to Claim 2, the plurality of press-fit holes are formed at the leg parts of the coupling members and the plurality of press-fit holes are different from each other in inner diameter.

According to Claim 4, in the vibration proof apparatus according to any one of Claim 1 to 3, each of the first attachment members includes protrusions that protrude from both ends of the cylindrical shape; the first attachment members are attached on the automobile body side after each of the first attachment members is inserted between a pair of plate-like wall parts that are fixed and attached on the automobile body side and stand at a predetermined interval, and then a bolt member is inserted and fastened into hole parts drilled at the wall parts and the through-hole of each of the first attachment members. In the case where each of the first attachment members is inserted between the wall parts, the protrusions abut on end portions of the wall parts to match the positions of the hole parts drilled at the wall parts with the position of the through-hole of each of the first attachment members.

### Advantageous Effects of Invention

According to the vibration-proof apparatus described in claim 1, the resin material is injected into a cavity of the resin die into which the second attachment member, the vibration-proof base, the plural first attachment members and the plural elastic members are inserted to mold the coupling members by injection, so that these members are integrally formed.

Here, the plural first attachment members and elastic members are arranged at the leg parts of the coupling members. Accordingly, in the case where these first attachment members are mounted on the automobile body side and the second attachment member is mounted on the vibration generator side, the vibration generator can be stably and advantageously supported on the automobile body side.

Further, the axial directions of the first attachment members or the axial directions of the press-fit holes which are formed at the leg parts of the coupling members and into which the first attachment members and the elastic members are pressed are parallel with the axial direction of the second attachment member. Accordingly, in the case where the vibration-proof apparatus is removed from the resin die after the coupling members are molded by injection, the vibration-proof apparatus can be removed in the same direction. Thus, the structure of the resin die can be advantageously simplified by simplifying the split structure of the resin die.

According to the vibration-proof apparatus described in claim 2, in addition to the effects obtained by the vibration-proof apparatus described in claim 1, the plural first attachment members are arranged at the leg parts of the coupling members and the plural first attachment members and leg parts of the coupling members are coupled to each other through the plural elastic members. Thus, a mass-spring system can be configured while the coupling members serve as masses (mass members) and the vibration-proof base and the plural elastic members serve as springs. In this case, according to the present invention, the plural elastic members are different from each other in the spring constant. Thus, the vibration mode can be changed without changing the arrangement positions of the first attachment members (elastic members). Specifically, for example, the rubber hardness of each of the plural elastic members is changed, so that the vibration mode can be changed by individually adjusting the spring constant of each of the elastic members. Thus, it is not necessary to change the shape of the resin die in order to adjust the arrangement positions of the first attachment members. Thus, the vibration mode of the vibration-proof apparatus can be easily changed.

As a result, for example, in the case where the vibration-proof apparatus is used as a dynamic damper (vibration damper) for suppressing the vibration on the automobile body side or the vibration generator side, tuning work for adjusting the unique vibration of the dynamic damper to the resonance frequency on the automobile body side can be easily performed at a low cost. On the other hand, even if the vibration-proof apparatus is not used as the dynamic damper to suppress the resonance, the work for adjusting the vibration mode of the vibration-proof apparatus to suppress the resonance can be easily performed at a low cost as similar to the above.

Further, if the plural elastic members are different from each other in the spring constant as the present invention, the position of the center of the gravity of the mass member can be shifted from the center lines of the springs in the mass-spring system. Thus, in the case where the vibration-proof apparatus is used as the dynamic damper (vibration damper), plural vibration modes can be advantageously and continuously generated.

According to the vibration-proof apparatus described in claim 3, in addition to the effects obtained by the vibration-proof apparatus described in claim 2, the plural press-fit holes are formed at the leg parts of the coupling members, and the plural press-fit holes are different from each other in inner diameter. Thus, even in the case where the elastic member (and the first attachment member) pressed into one press-fit hole and the elastic member (and the first attachment member) pressed into the other press-fit hole are configured in the same dimension and characteristic, the spring constant can be made different by changing each press-fit allowance. As a result, the elastic member (and the first attachment member) pressed into one press-fit hole and the elastic member (and the first attachment member) pressed into the other press-fit hole can be used as common members. Thus, the cost of the parts can be advantageously reduced to reduce the cost of the product as the whole vibration-proof apparatus.

According to the vibration-proof apparatus described in claim 4, in addition to the effects obtained by the vibration-proof apparatus described in any one of claims 1 to 3, in the case where the first attachment member is inserted between the wall parts, the protrusions provided at the both ends of the cylindrical shape abut on end portions of the wall parts to restrict insertion and movement of the first attachment member into the wall parts, so that the position of the through-hole of the first attachment member matches the positions of the hole parts drilled at the wall parts. Thus, it is possible to accurately match the positions of the hole parts drilled at the wall parts with the position of the through-hole formed at the first attachment member in a short time. Thus, the efficiency of work to insert and fasten a bolt member into the through-hole of the first attachment member and the hole parts drilled at the wall parts can be advantageously improved.

Here, in a configuration in which the protrusion is provided only at one end of the cylindrical shape unlike the vibration-proof apparatus of claim 4, the positions of the through-hole and the hole part on the one end side can match each other. However, the positions of the through-hole and the hole part on the other end side where no protrusion is provided are shifted from each other in the insertion direction of the first attachment member. Accordingly, in the case where the bolt member is inserted and fastened into the through-hole and the hole parts, it is necessary to match the positions of the through-hole and the hole part on the other end side with each other, thus deteriorating the efficiency of the work. On the contrary, the protrusions are provided at the both ends of the cylindrical shape in the vibration-proof apparatus of claim 4. Accordingly, the positions of the through-hole and the hole parts are not shifted from each other on the one end side and the other end side, and the position of the through-hole can accurately match the positions of the hole parts in a short time. Accordingly, the efficiency of work to insert and fasten the bolt member into the through-hole of the first attachment member and the hole parts drilled at the wall parts can be improved.

### Brief Description of Drawings

Fig. 1 is a perspective view of a vibration-proof apparatus in a first embodiment of the present invention.
Fig. 2(a) is a front view of the vibration-proof apparatus, and Fig. 2(b) is a side view of the vibration-proof apparatus.
Fig. 3(a) is a partially-enlarged front view of a leg part on the side where a short-axis attachment bracket is arranged, Fig. 3(b) is a partially-enlarged cross-sectional view of the leg part taken along the line IIIb-IIIb of Fig. 3(a), Fig. 3(c) is a partially-enlarged front view of the leg part on the side where a long-axis attachment bracket is arranged, and Fig. 3(d) is a partially-enlarged cross-sectional view of the leg part taken along the line IIId-IIId of Fig. 3(c).
Fig. 4 is a diagram for showing a state of a resin die immediately after the vibration-proof apparatus is molded.
Fig. 5(a) is a front view of a fixing bracket, and Fig. 5(b) is a cross-sectional view of the fixing bracket taken along the line Vb-Vb shown in Fig. 5(a).
Fig. 6(a) is a front view of the fixing bracket, and Fig. 6(b) is a cross-sectional view of the fixing bracket taken along the line VIb-VIb shown in Fig. 6(a).
Fig. 7(a) is a partially-enlarged front view of a leg part on the side where a short-axis attachment bracket is arranged in a second embodiment, Fig. 7(b) is a partially-enlarged cross-sectional view of the leg part taken along the line VIIb-VIIb of Fig. 7(a), Fig. 7(c) is a partially-enlarged front view of the leg part on the side where a long-axis attachment bracket is arranged, and Fig. 7(d) is a partially-enlarged cross-sectional view taken along the line VIId-VIId of Fig. 3(c).
Fig. 8(a) is a partially-enlarged front view of a leg part on the side where a long-axis attachment bracket is arranged in a modification example, and Fig. 8(b) is a partially-enlarged cross-sectional view of the leg part taken along the line VIIIb-VIIIb of Fig. 8(a).
Fig. 9 is a partially-enlarged cross-sectional view of the leg part taken along the line IX-IX of Fig. 8(b).

### Description of Embodiments

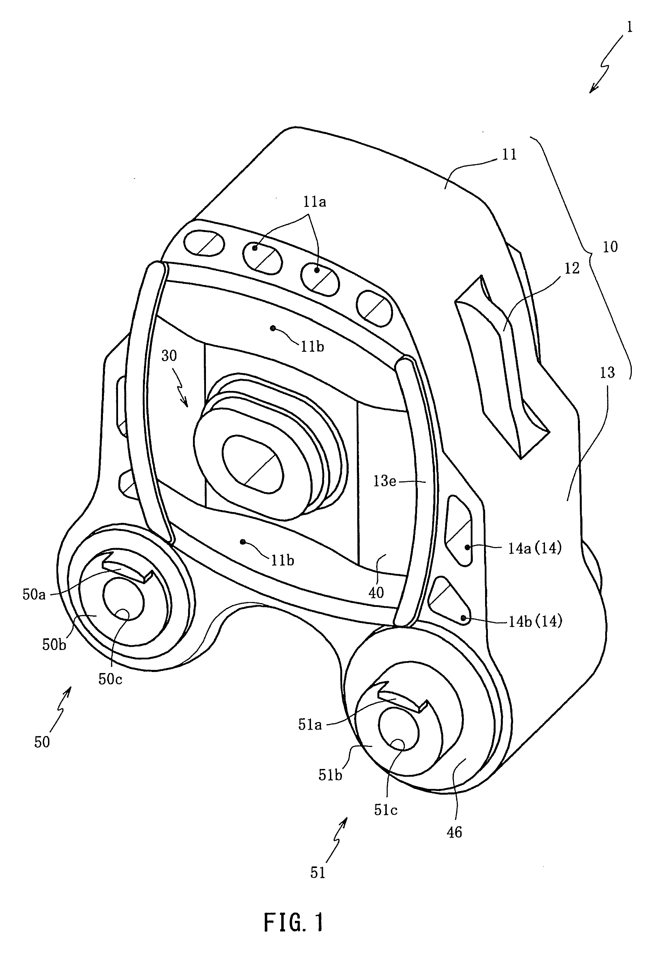

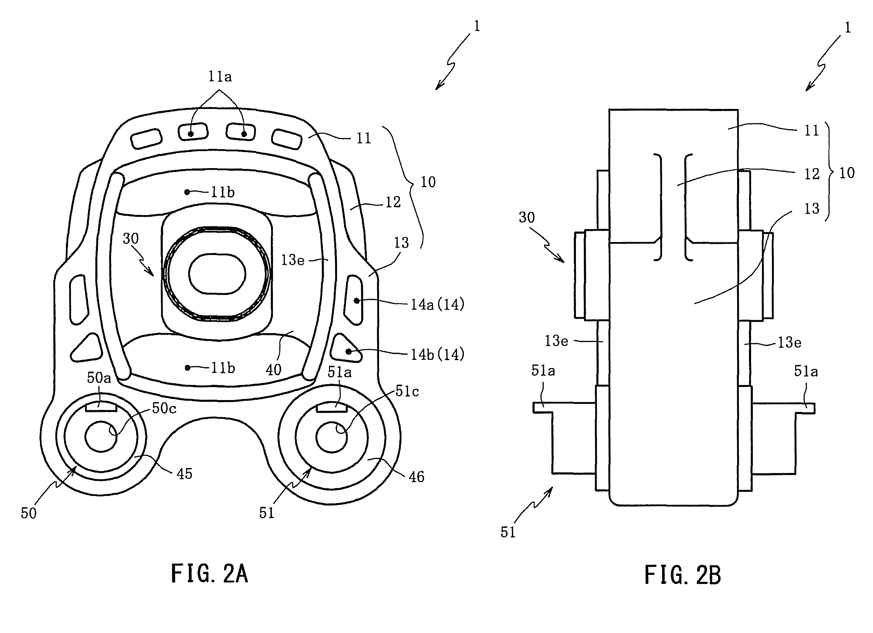

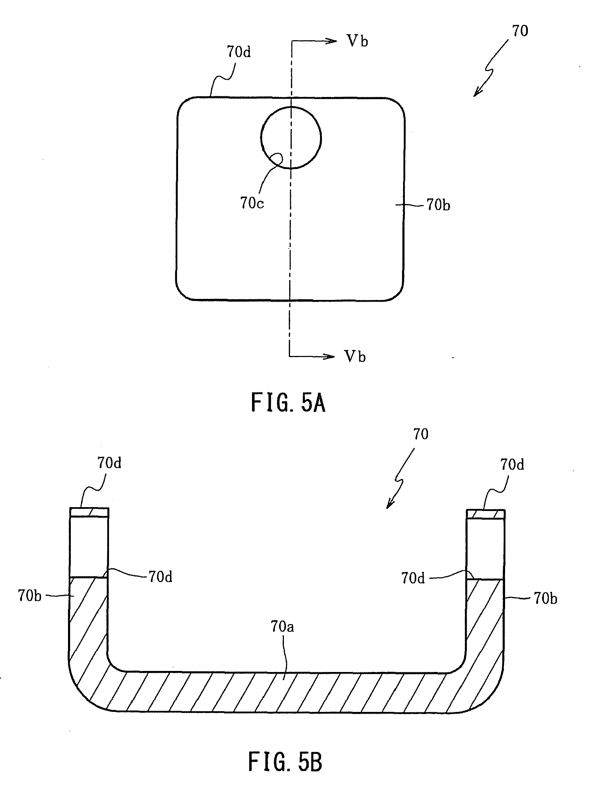

Hereinafter, exemplary embodiments of the present invention will be described with reference to the accompanying drawings. In the first place, the entire configuration of a vibration-proof apparatus 1 will be described with reference to Fig. 1 and Figs. 2. Fig. 1 is a perspective view of the vibration-proof apparatus 1 in an embodiment of the present invention, Fig. 2(a) is a front view of the vibration-proof apparatus 1, and Fig. 2(b) is a side view of the vibration-proof apparatus 1. It should be noted that the structure of a resin die 60 (see Fig. 5) can be simplified by simplifying the split structure of the resin die 60 used for molding the vibration-proof apparatus 1.

As shown in Fig. 1, the vibration-proof apparatus 1 supports and fixes an engine (not shown) of an automobile so as not to transmit vibration generated from the engine to an automobile body (not shown), and includes, as shown in Fig. 1, a pair of a short-axis attachment bracket 50 and a long-axis attachment bracket 51 attached to the automobile body side, a thin elastic member 45 and a thick elastic member 46 made of rubber-like elastic material that are vulcanized and attached to outer circumferential surfaces of the both attachment brackets 50 and 51, respectively, coupling members 10 made of resin material that include a main body part 11 formed continuously from a leg part 13 and a leg part 13 into which the both elastic members 45 and 46 are pressed, an inner cylinder 30 that is attached on the engine (vibration generator) side, and a vibration-proof base 40 made of rubber-like elastic material through which the inner cylinder 30 is coupled to the main body part 11.

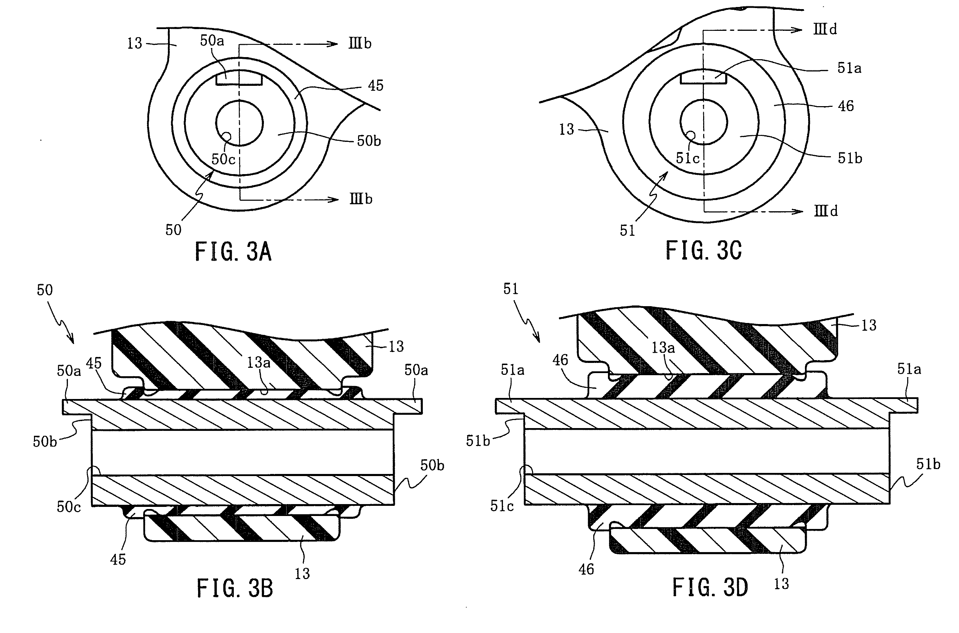

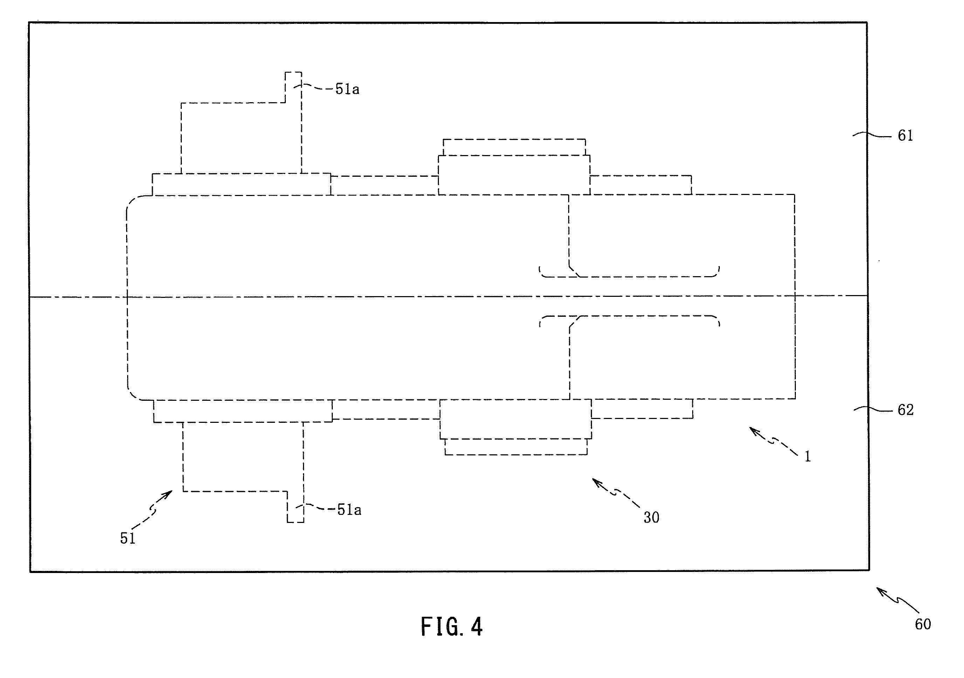

As shown in Fig. 1 and Figs. 2, the short-axis attachment bracket 50 and the long-axis attachment bracket 51 are made of steel material, and are attached on the automobile body side as described above. These attachment brackets 50 and 51 have through-holes 50c and 51c, respectively, and are formed in a cylindrical shape. Bolts (not shown) are inserted into the through-holes 50c and 51c, and end surfaces (seating surfaces 50b and 51b) of the both attachment brackets 50 and 51 are attached on the automobile body side by fastening the bolts. Further, the both attachment brackets 50 and 51 are provided with protrusions 50a and 51a, respectively, that protrude from both end surfaces in the axial direction. It should be noted that the short-axis attachment bracket 50 and the long-axis attachment bracket 51 will be described in more detail with reference to Figs. 3 and Fig. 4.

As shown in Fig. 1 and Figs. 2, each of the coupling members 10 includes the main body part 11, a reinforcing rib 12, and the leg part 13. The main body part 11 is formed in a rectangular cylindrical shape. The vibration-proof base 40 is arranged on the inner circumferential side of the main body part 11, and the inner cylinder 30 is vulcanized and attached to the vibration-proof base 40. Specifically, an outer circumferential surface of the vibration-proof base 40 is coupled to an inner circumferential surface of the main body part 11, and an outer circumferential surface of the inner cylinder 30 is coupled to an inner circumferential surface of the vibration-proof base 40.

Stoppers 13e are fixed and attached to both edges of the main body part 11 along the vertical direction. Each of the stoppers 13e continues to the vibration-proof base 40. When large displacement occurs on the engine side, parts (not shown) on the engine side abut on the stoppers 13e so as to restrict the displacement.

An upper wall of the main body part 11 is formed larger in thickness in the vertical direction (the vertical direction of Fig. 2(a)) than a lower wall of the main body part 11, and plural main body-side hollows 11a are provided at a wall surface of the upper wall in a recessed manner. Accordingly, the weight of the main body part 11 can be reduced while securing the stiffness of the main body part 11.

As shown in Fig. 1 and Figs. 2, each of the reinforcing ribs 12 that are plate-like members used for reinforcing the strength of the main body 10 in the vertical direction (the vertical direction of Fig. 2(a)) protrudes outward from a side wall of the main body part 11, and is formed so as to continue to the leg part 13.

As shown in Fig. 1 and Fig. 2(a), the leg parts 13 expand from the side walls and the lower wall of the main body part 11 so as to surround the side walls and the lower wall of the main body part 11, and the thin elastic member 45 and the thick elastic member 46 that are vulcanized and attached to the short-axis attachment bracket 50 and the long-axis attachment bracket 51, respectively, are pressed into lower portions of the leg parts 13. As described above, the leg parts 13 are coupled to the side walls and the lower wall of the main body part 11, so that the leg parts 13 are strongly coupled to the main body part 11.

Here, a pair of press-fit holes 13a and 13b are formed to penetrate the leg parts 13, and the elastic members 45 and 46 are pressed into the pair of press-fit holes 13a and 13b, respectively (see Fig. 3). It should be noted that the axial directions of the press-fit holes 13a and 13b are parallel with the axial direction of the inner cylinder 30. Accordingly, demoldability from the resin die 60 (see Fig. 4) can be secured.

Further, as shown in Fig. 2(a), first hollow parts 14 are provided at one of wall surfaces (wall surface on the near side of Fig. 2(a)) of the leg parts 13 in a recessed manner, and second hollow parts (not shown) are provided at the other of wall surfaces (wall surface on the depth side of Fig. 2(a)) of the leg parts 13 in a recessed manner. It should be noted that the first hollow parts 14 and the second hollow parts are formed in the same shape. Thus, only the first hollow parts 14 are illustrated and explained, and the illustration and explanation of the second hollow parts are omitted.

The first hollow parts 14 are spaces provided at the leg parts 13 so as to reduce the weight of the leg parts 13, and include upper first hollow parts 14a provided at upper portions of the leg parts 13 in a recessed manner and lower front hollow parts 14b provided at lower portions of the leg parts 13 in a recessed manner. Each of the upper first hollow parts 14a is formed in a parallelogram shape when viewed from the front, and each of the lower first hollow parts 14b is formed in a triangle shape when viewed from the front, so that the thicknesses of the wall parts surrounding the both hollow parts 14a and 14b are made substantially constant.

As shown in Fig. 1 and Fig. 2(a), the inner cylinder 30 is made of aluminum alloy, and is formed in a cylindrical shape having a through-hole 30a. A bolt (not shown) is inserted and fastened into the through-hole 30a, so that the inner cylinder 30 is coupled on the engine side. The vibration-proof base 40 is a member for absorbing vibration generated on the engine side, and is made of rubber-like elastic material. Gaps 11b are formed between the vibration-proof base 40 and an upper inner circumferential surface of the main body part 11 and between the vibration-proof base 40 and a lower inner circumferential surface of the main body part 11. Accordingly, the spring constant of the vibration-proof base 40 in the vertical direction can be set smaller than that in the horizontal direction.

Next, with reference to Figs. 3, there will be described in detail the leg parts 13 into which the thin elastic member 45 and the thick elastic member 46 that are vulcanized and attached to the outer circumferential surfaces of the short-axis attachment bracket 50 and the long-axis attachment bracket 51, respectively, are pressed. Fig. 3(a) is a partially-enlarged front view of the leg part 13 on the side where the short-axis attachment bracket 50 is arranged, and Fig. 3(b) is a partially-enlarged cross-sectional view of the leg part 13 taken along the line IIIb-IIIb of Fig. 3(a). Further, Fig. 3(c) is a partially-enlarged front view of the leg part 13 on the side where the long-axis attachment bracket 51 is arranged, and Fig. 3(d) is a partially-enlarged cross-sectional view of the leg part 13 taken along the line IIId-IIId of Fig. 3(c).

As shown in Figs. 3, each of the short-axis attachment bracket 50 and the long-axis attachment bracket 51 has a cylindrical shape whose surface obtained by cutting with a planar surface perpendicular to the axis is in an annular shape, and the seating surfaces 50b and 51b are formed at both end surfaces of the cylindrical members. Each of the seating surfaces 50b and 51b is formed in an annular shape, and each of the protrusions 50a and 51a protrudes from a part of the annular shape in the axial direction (the horizontal direction of Fig. 3(b) and Fig. 3(d)). In addition, the through-holes 50c and 51c are concentrically opened in the middles of the seating surfaces 50b and 51b, respectively.

As shown in Figs. 3, the through-holes 50c and 51c are formed to penetrate along the axial direction, and are communicated from the one pair of the seating surfaces 50b and 51b of the short-axis attachment bracket 50 and the long-axis attachment bracket 51 to the other pair of the seating surfaces 50b and 51b of the short-axis attachment bracket 50 and the long-axis attachment bracket 51.

It should be noted that the short-axis attachment bracket 50 and the long-axis attachment bracket 51 are configured in the same shape except that the lengths in the axial direction (the lengths in the horizontal direction of Fig. 3(b) and Fig. 3(d)) are different from each other. Specifically, the inner diameter and outer diameter of the short-axis attachment bracket 50 are set at the same dimensions as the inner diameter and outer diameter of the long-axis attachment bracket 51 except that the length of the short-axis attachment bracket 50 in the axial direction is shorter than the length of the long-axis attachment bracket 51 in the axial direction. Further, the protrusions 50a are formed in the same shape as the protrusions 51a.

Each of the thin elastic member 45 and the thick elastic member 46 is a cylindrical member made of rubber-like elastic material, and cylindrical inner circumferential surfaces thereof are vulcanized and attached to outer circumferential surfaces of the short-axis attachment bracket 50 and the long-axis attachment bracket 51. In addition, the thin elastic member 45 and the thick elastic member 46 are pressed into the press-fit holes 13a and 13b, respectively, that are formed to penetrate the leg parts 13. It should be noted that the outer diameter of the thin elastic member 45 is set at a dimension smaller than the outer diameter of the thick elastic member 46 (namely, set at a thinner thickness). Further, the outer diameters of the thin elastic member 45 and the thick elastic member 46 are set at dimensions larger than the inner diameters of the press-fit holes 13a and 13b, respectively, thereby securing the press-fit allowance when being pressed.

Next, demoldability from the resin die 60 after the vibration-proof apparatus 1 is molded will be described with reference to Fig. 4. Fig. 4 is a diagram for showing a state of the resin die 60 immediately after the vibration-proof apparatus 1 is molded. It should be noted that reference numerals are given only to main constitutional elements, and are not given to the other constitutional elements.

The resin die 60 includes a first resin die 61 and a second resin die 62. After the inner cylinder 30 and the vibration-proof base 40 that is vulcanized and attached to the inner cylinder 30 are disposed at the second resin die 62, the first resin die 61 is clamped to the second resin die 62 to fill (inject) resin material into a cavity formed in the resin die 60. Accordingly, the resin material is formed integrally with the inner cylinder 30 and the vibration-proof base 40. Accordingly, the molded product is removed from the resin die 60, and the thin elastic member 45 and the thick elastic member 46 that are vulcanized and attached to the outer circumferences of the short-axis attachment bracket 50 and the long-axis attachment bracket 51 are pressed into the press-fit holes 13a and 13b of the leg parts 13, respectively, so that the vibration-proof apparatus 1 is completed.

Here, the axial directions of the inner cylinder 30 and the press-fit holes 13a and 13b of the vibration-proof apparatus 1 are parallel with each other, and thus the middle-sized protruding direction (axial direction) for holding the inner cylinder 30 and the vibration-proof base 40 can be made parallel with the axial directions for forming the press-fit holes 13a and 13b.

Accordingly, as shown in Fig. 4, in the case where the molded product is removed from the resin die 60 after the inner cylinder 30 and the vibration-proof base 40 are placed in the first resin die 61 and the first resin die 61 and the second resin die 62 are clamped to each other to mold the resin material, the first resin die 61 and the second resin die 62 can be removed in the same direction, namely, the direction where the first resin die 61 and the second resin die 62 are vertically separated from each other in Fig. 5.

Thus, the structure of the resin die 60 can be simplified by simplifying the split structure of the resin die 60 used for the vibration-proof apparatus 1. Further, due to the simple structure of the resin die 60, the cost of the resin die 60 can be reduced. Furthermore, the number of vibration-proof apparatuses 1 molded from one resin die 60 can be increased.

In addition, the protruding directions of the protrusion 50a and 51a provided at the short-axis attachment bracket 50 and the long-axis attachment bracket 51, respectively, are parallel with the axial directions of the inner cylinder 30 and the press-fit holes 13a and 13b (see Fig. 1 to Figs. 3). Accordingly, even in the case where the protrusions 50a and 51a are provided at the short-axis attachment bracket 50 and the long-axis attachment bracket 51, respectively, the structure of the resin die 60 can be simplified by simplifying the split structure of the resin die 60.

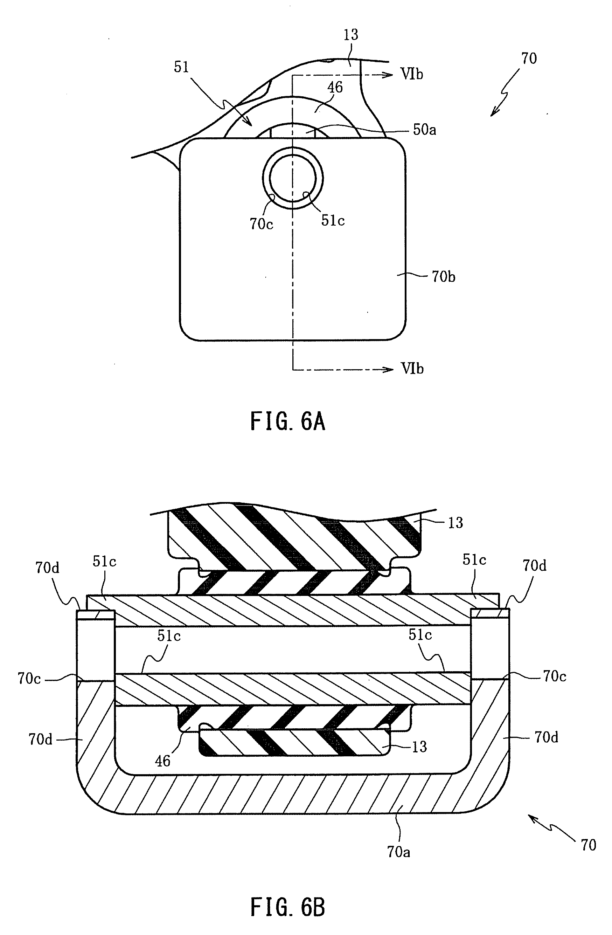

Next, mounting of the vibration-proof apparatus 1 to the body side will be described with reference to Figs. 5 and Figs. 6. Fig. 5(a) is a front view of a fixing bracket 70, and Fig. 5(b) is a cross-sectional view of the fixing bracket 70 taken along the line Vb-Vb shown in Fig. 5(a). Further, Fig. 6(a) is a front view of the fixing bracket 70, and Fig. 6(b) is a cross-sectional view of the fixing bracket 70 taken along the line VIb-VIb shown in Fig. 6(a). Each of Fig. 6(a) and Fig. 6(b) illustrates a state in which the long-axis attachment bracket 51 of the vibration-proof apparatus 1 is mounted to the fixing bracket 70. It should be noted that the configuration of the fixing bracket by which the short-axis attachment bracket 50 is attached on the automobile body side is the same as the configuration of the fixing bracket 70 except that the facing interval of wall parts 70b is different, and thus the explanation thereof is omitted.

As shown in Figs. 5, the fixing bracket 70 made of steel material is a bracket attached and fixed on the automobile body side, and is bent to be formed in a U-shape when viewed from the side. Specifically, the fixing bracket 70 includes a plate-like bottom plate 70a deposited on the automobile body side, and a pair of plate-like wall parts 70b that are continuously provided from the bottom plate to stand at a predetermined interval.

As shown in Fig. 5(b), each of upper end surfaces 70d located at upper portions of the wall parts 70b is parallel with the bottom plate 70a, and is formed in a planar surface. Further, hole parts 70c are concentrically formed at the respective wall parts 70b when viewed from the front, and bolts (not shown) for fastening the wall parts 70b to the long-axis attachment bracket 51 are inserted into the respective hole parts 70c.

As shown in Figs. 6, in the case where the long-axis attachment bracket 51 is fastened to the fixing bracket 70, the attachment bracket 51 is first inserted between the wall parts 70b that face each other. At this time, when the long-axis attachment bracket 51 is inserted and moved by a predetermined amount, the protrusions 51a provided at the both seating surfaces 51b of the long-axis attachment bracket 51 abut on the respective upper end surfaces 70d. Accordingly, insertion and movement of the long-axis attachment bracket 51 into the upper end surfaces 70d are restricted by the respective protrusions 51a, and the position of the through-hole 51c of the long-axis attachment bracket 51 matches the positions of the hole parts 70c. Accordingly, the position of the through-hole 51c can accurately match the positions of the hole parts 70c in a short time. Thus, the efficiency of work to insert and fasten a bolt (not shown) into the through-hole 51c and the hole parts 70c can be improved.

Here, in a vibration-proof apparatus in which the protrusion 51a is provided only at one end surface of the long-axis attachment bracket 51 unlike the vibration-proof apparatus 1 of the application, the positions of the through-hole 51c and the hole part 70c on the one end surface side can match each other. However, the positions of the through-hole 51c and the hole part 70c on the other end surface side where no protrusion 51a is provided are shifted from each other in the insertion direction. Accordingly, in the case where the bolt (not shown) is inserted and fastened into the through-hole 51c and the hole parts 70c, it is necessary to match the positions of the through-hole 51c and the hole part 70c on the other end surface side with each other, thus deteriorating the efficiency of the work.

On the contrary, the protrusions 51a are provided at the both end surfaces of the long-axis attachment bracket 51 in the vibration-proof apparatus 1 of the application. Accordingly, the positions of the through-hole 51c and the hole parts 70c are not shifted from each other in the insertion direction on the one end surface side and the other end surface side, and the position of the through-hole 51c can accurately match the positions of the hole parts 70c in a short time. Accordingly, in the vibration-proof apparatus 1 of the application, the efficiency of work to insert and fasten the bolt into the through-hole 51c and the hole parts 70c can be improved.

In addition, as shown in Fig. 6(a), the upper end surfaces 70d abutting on the protrusions 51a are in a planar shape, and the surfaces of the protrusions 51a abutting on the upper end surfaces 70d are also in a planar shape. Accordingly, even if the positions of the through-hole 51c and the hole parts 70c are shifted from each other in the horizontal direction of Fig. 6(a) when the protrusions 51a abut on the upper end surfaces 70d due to the processing tolerance of the through-hole 51c and the hole parts 70c, or the protrusions 51a and the upper end surfaces 70d, the shift can be easily adjusted by sliding the long-axis attachment bracket 51. Accordingly, the position of the through-hole 51c can accurately match the positions of the hole parts 70c in a short time.

As described above, according to the vibration-proof apparatus 1 of the embodiment, the inner cylinder 30 attached on the engine (vibration generator) side is coupled to the main body part 11 of the coupling members 10 through the vibration-proof base 40, and the short-axis attachment bracket 50 and the long-axis attachment bracket 51 attached on the automobile body side are coupled to the leg parts 13 of the coupling members 10 through the thin elastic member 45 and the thick elastic member 46, respectively, so that a mass-spring system can be configured while the coupling members 10 serve as masses (mass members) and the vibration-proof base 40 and the both elastic members 45 and 46 serve as springs.

In this case, because the thin elastic member 45 and the thick elastic member 46 according to the embodiment are different from each other in the spring constant, it is not necessary to change the arrangement positions of the short-axis attachment bracket 50 and the long-axis attachment bracket 51, and the vibration mode can be changed. Specifically, for example, the rubber hardness of each of the thin elastic member 45 and the thick elastic member 46 is changed or the dimension (namely, the press-fit allowance) of the thickness of each rubber is changed, so that the vibration mode can be changed by individually adjusting the spring constant of each of the elastic members 45 and 46. Thus, it is not necessary to change the shape of the resin die 60 in order to adjust the arrangement positions of the short-axis attachment bracket 50 and the long-axis attachment bracket 51, so that the vibration mode of the vibration-proof apparatus 1 can be easily changed.

As a result, in the case where the vibration-proof apparatus 1 is used as a dynamic damper (vibration damper) for suppressing the vibration on the automobile body side or the engine (vibration generator) side, tuning work for adjusting the unique vibration of the dynamic damper to the resonance frequency on the automobile body side can be easily performed at a low cost. On the other hand, even if the vibration-proof apparatus 1 is not used as the dynamic damper to suppress the resonance, the work for adjusting the vibration mode of the vibration-proof apparatus 1 to suppress the resonance can be easily performed at a low cost as similar to the above.

Further, as the vibration-proof apparatus 1 in the embodiment, if the thin elastic member 45 and the thick elastic member 46 are different from each other in the spring constant, the position of the center of the gravity of the mass member (namely, the mass of the coupling members 10) can be shifted from the center lines of the springs (springs configured by the thin elastic member 45 and the thick elastic member 46) in the mass-spring system. Thus, in the case where the vibration-proof apparatus 1 is used as the dynamic damper (vibration damper), plural vibration modes can be continuously generated.

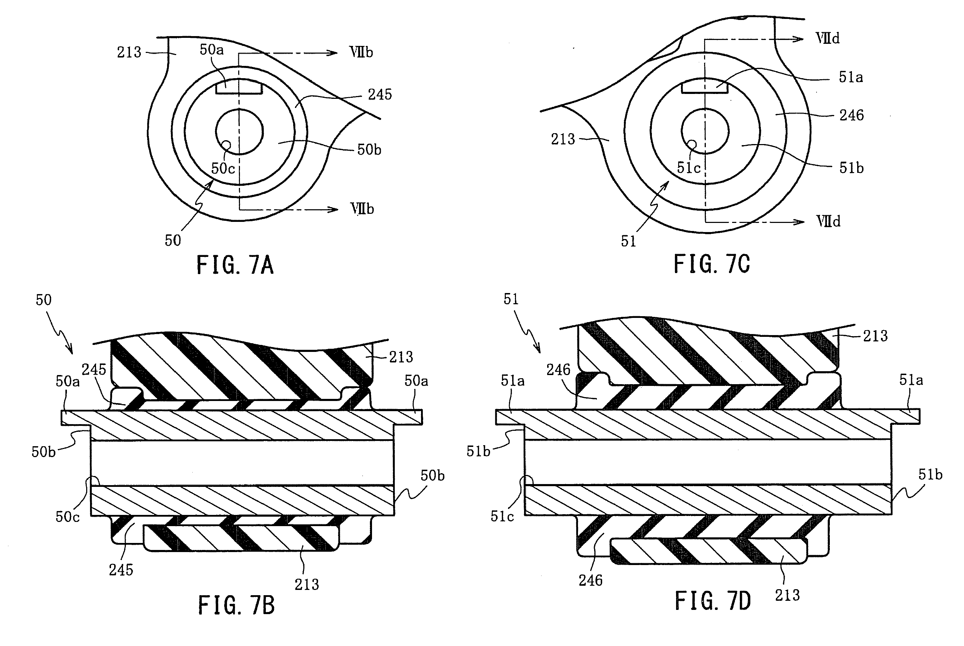

Next, a second embodiment will be described with reference to Figs. 7. In the first embodiment, there has been described a case in which the thin elastic member 45 and the thick elastic member 46 are pressed into the press-fit holes 13a and 13b of the leg parts 13, respectively. However, in the second embodiment, a thin elastic member 245 and a thick elastic member 246 are inserted into leg parts 213 for molding. It should be noted that the same constitutional elements as those in the first embodiment are given the same reference numerals, and the explanations thereof are omitted.

Fig. 7(a) is a partially-enlarged front view of the leg part 213 on the side where the short-axis attachment bracket 50 is arranged in the second embodiment, and Fig. 7(b) is a partially-enlarged cross-sectional view of the leg part 213 taken along the line VIIb-VIIb of Fig. 7(a). Further, Fig. 7(c) is a partially-enlarged front view of the leg part 213 on the side where the long-axis attachment bracket 51 is arranged, and Fig. 7(d) is a partially-enlarged cross-sectional view of the leg part 213 taken along the line VIId-VIId of Fig. 3(c).

As shown in Figs. 7, each of the thin elastic member 245 and the thick elastic member 246 is a cylindrical member made of rubber-like elastic material, and cylindrical inner circumferential surfaces thereof are vulcanized and attached to outer circumferential surfaces of the short-axis attachment bracket 50 and the long-axis attachment bracket 51. In the second embodiment, the thin elastic member 245 and the thick elastic member 246 are inserted into the leg parts 13 for molding.

Specifically, in the second embodiment, after the inner cylinder 30 and the vibration-proof base 40 that is vulcanized and attached to the inner cylinder 30, and the attachment brackets 50 and 51 and the elastic members 245 and 246 that are vulcanized and attached to the attachment brackets 50 and 51, respectively, are disposed in the second resin die 62, the first resin die 61 is clamped to the second resin die 62 to fill (inject) resin material into the cavity formed in the resin die 60 (see Fig. 4). Accordingly, the resin material is formed integrally with the vibration-proof base 40 and the elastic members 245 and 246, and the vibration-proof apparatus is completed.

It should be noted that the outer diameter of the thin elastic member 245 is set at a dimension smaller than the outer diameter of the thick elastic member 246 (namely, set at a thinner thickness).

The present invention has been described above on the basis of the embodiments. However, it can be easily understood that the present invention is not limited to the above-described embodiments and can be variously changed and modified without departing from the scope of the present invention.

In the vibration-proof apparatus 1 according to each embodiment, each of the protrusions 50a and 51a is formed in a rectangular solid shape. However, the present invention is not limited to this. Specifically, each of the protrusions 50a and 51a may be formed in a columnar shape (for example, each of the protrusions 50a and 51a may be separately formed in a pin shape to be punched into the seating surfaces 50b and 51b), or each of the protrusions 50a and 51a may be formed in a triangle pole shape. Even in the case of this configuration, the protrusions 50a and 51a can restrict the insertion and movement of the attachment brackets 50 and 51 into the upper end surfaces 70d, so that the positions of the through-holes 50c and 51c can match the positions of the hole parts 70c.

Further, in the vibration-proof apparatus 1 according to each embodiment, the upper end surfaces 70d abutting on the protrusions 50a and 51a are formed in a planar shape. However, the present invention is not limited to this. Specifically, rectangular grooves into which the protrusions 50a and 51a can be fitted are provided at the upper end surfaces 70d, and the protrusions 50a and 51a may be inserted into the grooves. Further, V-shaped grooves are provided at the upper end surfaces 70d, each of the protrusions 50a and 51a is formed in a shape matching the V-shaped groove (for example, each of the protrusions 50a and 51a is formed in a triangle pole shape), and the protrusions 50a and 51a may be inserted into the V-shaped grooves.

In the cases of the configurations, the insertion and movement of the attachment brackets 50 and 51 into the upper end surfaces 70d can be restricted, and the movement of the attachment brackets 50 and 51 in the horizontal direction (the movement in the horizontal direction of Fig. 6(a)) can be restricted. Accordingly, the positions of the through-holes 50c and 51c can accurately match the positions of the hole parts 70c in a short time. Thus, the efficiency of work to insert and fasten the bolts (not shown) into the through-holes 50c and 51c and the hole parts 70c can be further improved.

Further, in the above-described first embodiment, there has been described a case in which the thin elastic member 45 pressed into the leg part 13 (press-fit hole 13a) of one of the pair of leg parts 13 is different in outer diameter from the thick elastic member 46 pressed into the other leg part 13 (press-fit hole 13b) (specifically, the thin elastic member 45 and the thick elastic member 46 are different in thickness from each other because the attachment brackets 50 and 51 are the same in outer diameter). However, the present invention is not necessarily limited to this. It is obvious that the elastic member pressed into the leg part 13 (press-fit hole 13a) of one of the pair of leg parts 13 may be the same in outer diameter as the elastic member pressed into the other leg part 13 (press-fit hole 13b).

Specifically, on the assumption that the press-fit hole 13a of one of the pair of leg parts 13 is formed different in inner diameter from the press-fit hole 13b of the other of the pair of leg parts 13, even in the case where the elastic member (and the attachment member) pressed into the press-fit hole 13a of one of the pair of leg parts 13 and the elastic member (and the attachment member) pressed into the press-fit hole 13b of the other of the pair of leg parts 13 are configured in the same dimension and characteristic, the spring constant can be made different by changing each press-fit allowance. As a result, the elastic member (and the attachment member) pressed into the press-fit hole 13a of one of the pair of leg parts 13 and the elastic member (and the attachment member) pressed into the press-fit hole 13b of the other of the pair of leg parts 13 can be used as common members. Thus, the cost of the parts can be reduced to reduce the cost of the product as the whole vibration-proof apparatus.

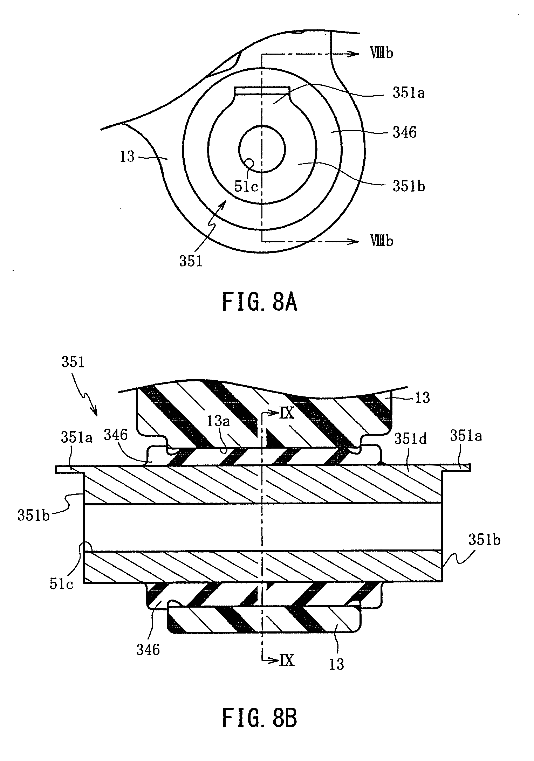

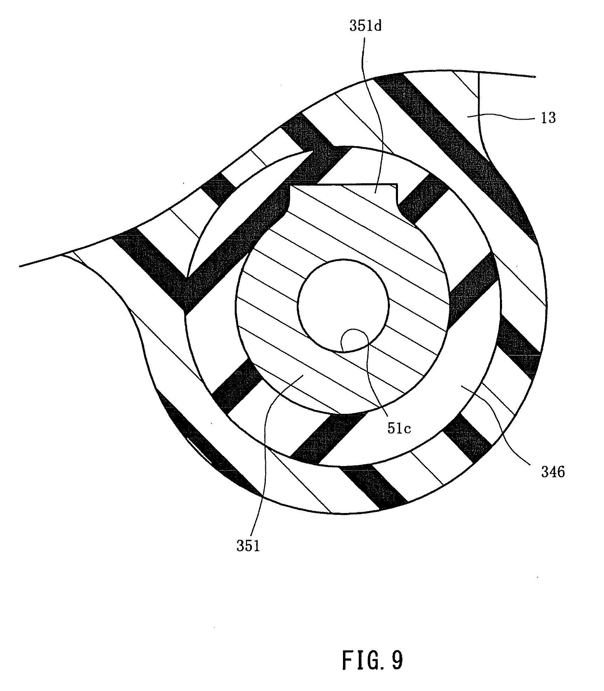

Further, in each embodiment, there has been described a case in which each of the short-axis attachment bracket 50 and the long-axis attachment bracket 51 is formed in a cylindrical shape whose cross-section is in an annular shape. However, it is obvious that the present invention is not limited to this, but the shape may be different. A modification example of the different shape will be described with reference to Figs. 8 and Fig. 9.

Fig. 8(a) is a partially-enlarged front view of the leg part 13 on the side where a long-axis attachment bracket 351 is arranged in the modification example, and Fig. 8(b) is a partially-enlarged cross-sectional view of the leg part 13 taken along the line VIIIb-VIIIb of Fig. 8(a). Further, Fig. 9 is a partially-enlarged cross-sectional view of the leg part 13 taken along the line IX-IX of Fig. 8(b).

As shown in Figs. 8 and Fig. 9, in the long-axis attachment bracket 351 of the modification example, an extension part 351d whose cross-section is in a rectangular shape extends outward (upward in Fig. 9) from an outer circumferential surface of the cylindrical shape whose cross-section is in an annular shape. Accordingly, a seating surface 351b having an annular area and a rectangular area protruding from the annular area is formed at an end surface of the long-axis attachment bracket 351.

Further, the long-axis attachment bracket 351 includes protrusions 351a protruding from the both seating surfaces 351b in parallel with the axial direction, and each protrusion 351a protrudes from the rectangular area protruding outward from the annular area. Specifically, each protrusion 351a is provided at a position (a position where the annular shape is not interrupted) where the annular shape of the seating surface 351b is maintained. With this arrangement, an area of each seating surface 351b that is pressed into and brought into contact with the wall plate 70b (see Figs. 6) by fastening a bolt can be secured to a regulated area. Thus, the pressure from the wall plates 70b when fastening the bolt can be dispersed by the seating surfaces 351b and as a result, deformation of the seating surfaces 351b and wall plates 70b can be prevented.

Further, the extension part 351d is provided at the outer circumferential surface of the long-axis attachment bracket 351, so that attachment strength can be secured by enlarging an attachment area with a thick elastic member 346. Accordingly, since the both can be strongly integrated, so that the long-axis attachment bracket 351 can be prevented from dropping off from the thick elastic member 346 in the axial direction. Further, in the case where rotational force about the axis is applied to the long-axis attachment bracket 351, the long-axis attachment bracket 351 can be prevented from rotating about the axis relative to the thick elastic member 346.

Further, in each embodiment, there has been described a case in which the outer diameters of the short-axis attachment bracket 50 and the long-axis attachment bracket 51 are set at the same value. However, it is obvious that the present invention is not limited to this, but the outer diameters may be different from each other. As similar to the above, the lengths of the thin elastic members 45 and 245 and the thick elastic members 46, 246, and 346 are set at the same value in the axial direction (for example, the lengths in the horizontal direction of Fig. 3(b) and Fig. 3(d)). However, it is obvious that the lengths may be different from each other in the axial direction. Specifically, the thin elastic members 45 and 245 and the thick elastic members 46, 246, and 346 can be made different in spring constant by combining one or more of the rubber shape (dimension of the thickness and the length in the axial direction), the rubber hardness, the rubber material, and the press-fit allowance.

In the above-described first embodiment, there has been described a case in which the thin elastic member 45 and the thick elastic member 46 are pressed into the both leg parts 13. In addition, in the second embodiment, there has been described a case in which the thin elastic member 245 and the thick elastic member 246 are inserted into the both leg parts 213 for molding. However, the present invention is not necessarily limited to this, the thin elastic member 45 or the thick elastic member 46 may be pressed into one of the both leg parts 13 and 213, and the thin elastic member 245 or the thick elastic member 246 may be inserted into the other of the leg parts 13 and 213 for molding.

In each embodiment, there has been described a case in which two first attachment brackets 51 are provided. However, it is obvious that the present invention is not necessarily limited to this, but three or more first attachment brackets 51 may be provided.

### Reference Signs List

- 1: vibration-proof apparatus
- 50: short-axis attachment bracket (first attachment member)
- 51, 351: long-axis attachment bracket (first attachment member)
- 13, 213: leg part
- 11: main body part
- 10: coupling member
- 30: inner cylinder (second attachment member)
- 40: vibration-proof base
- 45, 245: thin elastic member (elastic member)
- 46, 246, 346: thick elastic member (elastic member)
- 50c, 51c: through-hole
- 13a, 13b: press-fit hole
- 50a, 51a, 351a: protrusion
- 70b: wall part
- 70c: hole part
- 70d: upper end surface (end portion of wall part)

## Claims

1. A vibration-proof apparatus comprising:
a plurality of first attachment members that are attached on the automobile body side;
coupling members made of resin material that include leg parts in which the plurality of first attachment members are arranged and a main body part that is formed continuously from the leg parts;
a second attachment member that is attached on the vibration generator side; and
a vibration-proof base made of rubber-like elastic material that couples the second attachment member to the main body part of the coupling members, wherein a plurality of elastic members made of rubber-like elastic material that couple the plurality of first attachment members to the leg parts of the coupling members are provided, each of the first attachment members and the second attachment member is formed in a cylindrical shape having a through-hole, the first attachment members are inserted into the leg parts of the coupling members for molding or pressed thereinto together with the elastic members, and the axial directions of the first attachment members or press-fit holes which are formed at the leg parts of the coupling members and into which the first attachment members and the elastic members are pressed are parallel with the axial direction of the second attachment member.

2. The vibration-proof apparatus according to claim 1, wherein the plurality of elastic members are different from each other in spring constant.

3. The vibration-proof apparatus according to claim 2, wherein the plurality of press-fit holes are formed at the leg parts of the coupling members, and the plurality of press-fit holes are different from each other in inner diameter.

4. The vibration-proof apparatus according to any one of claims 1 to 3,
wherein: each of the first attachment members includes protrusions that protrude from both ends of the cylindrical shape; the first attachment members are attached on the automobile body side after each of the first attachment members is inserted between a pair of plate-like wall parts that are fixed and attached on the automobile body side and stand at a predetermined interval, and then a bolt member is inserted and fastened into hole parts drilled at the wall parts and the through-hole of each of the first attachment members; and in the case where each of the first attachment members is inserted between the wall parts, the protrusions abut on end portions of the wall parts to match the positions of the hole parts drilled at the wall parts with the position of the through-hole of each of the first attachment members.
